# EUROPEAN PATENT APPLICATION

(11) **EP 4 093 047 A1**
(43) Date of publication of application: **23.11.2022**
(21) Application number: 21741779.9
(22) Date of filing: 14.01.2021
(51) Int. Cl.: H04R 1/10

(54) **WIRELESS EARBUD AND WIRELESS EARBUD SYSTEM**

(30) Priority: 17.01.2020 CN 202010055636
(71) Applicant: GUANGDONG OPPO MOBILE TELECOMMUNICATIONS CORP., LTD., Dongguan, Guangdong 523860 (CN)
(72) Inventor: LIU, Shaobin, Dongguan, Guangdong 523860 (CN)
(74) Representative: Taor, Simon Edward William
(86) International application number: PCT/CN2021/071797
(87) International publication number: WO 2021/143775

(57) **Abstract**

A wireless earbud includes: a power supply module (10) configured to supply power to the wireless earbud; an earbud system (20); a switch module (30) connected to the power supply module (10) and the earbud system (20); a control module (40) configured to control, based on a low power consumption entry instruction, the switch module (30) to disconnect a connection between the power supply module (10) and the earbud system (20) to power off the earbud system (20). A wireless earbud system is also provided.

## Description

### CROSS-REFERENCES TO RELATED APPLICATIONS

This application claims a priority to and the benefit of Chinese Patent Application No. 202010055636.1, filed with China National Intellectual Property Administration on January 17, 2020, the entire disclosure of which is incorporated herein by reference.

### FIELD

The present disclosure relates to the technical field of earphone, and in particular, to a wireless earbud and a wireless earbud system.

### BACKGROUND

True Wireless Stereo (TWS) earbuds, compared with traditional wired earphones, adopts Bluetooth for connection instead of wire, thereby achieving a wireless separation of Bluetooth left and right channels. In this way, the TWS earbuds can be used in diverse manners. For example, the TWS earbuds may be used by an individual or shared with others, or they can be used as two devices.

Currently, the TWS earbuds, as leaving the factory, may be turned off by some manufacturers. When the earbuds are turned off, the current is about 10 uA. For a 30 mAh battery, the power of full charge condition will run out in more than four months.

In the existing solutions, generally, a charging chip with a low power consumption mode is employed, and other power sources of the earbud are connected to its output pins as much as possible. In this way, the earbuds are set in a low power consumption mode when they leave the factory, thereby prolonging the battery's usable time. Usually, the power consumption of this charging chip is about 1 uA, and the power consumption of the lithium battery protecting charging chip is about 4 uA. Thus, the total power consumption is about 5 uA. The power will run out in more than eight months under full power.

The existing solutions have several disadvantages:
1. Exorbitant price. Generally, the price of the charging chip with low power consumption mode is much more expensive than a conventional chip, which will increase the cost.
2. Relatively great area. The charging chip with low power consumption mode generally has a relatively greater area, which may bring difficulties in layout and so on.
3. Difficulty in acquisition. The charging chip with low power consumption mode is generally manufactured by top international manufacturers, which will bring difficulties in acquisition.

### SUMMARY

The present disclosure proposes a wireless earbud, which uses a switch module to control the wireless earbud to enter a low power consumption mode, thereby significantly reducing current consumption, lowering cost and acquisition difficulty, and reducing design difficulty.

An embodiment of a first aspect of the present disclosure provides a wireless earbud, including: a power supply module configured to supply power to the wireless earbud; an earbud system; a switch module connected to the power supply module and the earbud system; and a control module configured to control, based on a low power consumption entry instruction, the switch module to disconnect the power supply module from the earbud system to power off the earbud system.

According to the wireless earbud of the embodiment of the present disclosure, by adding a switch module between the power supply module and the earbud system, the control module can control, based on the low power consumption entry instruction, the switch module to disconnect the power supply module from the earbud system to power off the earbud system. In this way, the wireless earbud can enter a low power consumption mode, thereby significantly reducing current consumption, lowering cost and acquisition difficulty, and reducing design difficulty.

An embodiment of a second aspect of the present disclosure provides a wireless earbud system, including a charging box, and the above-mentioned wireless earbud.

In the wireless earbud system according to the embodiments of the present disclosure, the switch module can be used to control the wireless earbud to enter the low power consumption mode, thereby significantly reducing current consumption, lowering cost and acquisition difficulty, and reducing design difficulty.

### BRIEF DESCRIPTION OF DRAWINGS

FIG. 1 is a schematic block diagram of a wireless earbud according to an embodiment of the present disclosure.
FIG. 2 is a schematic block diagram of a wireless earbud system according to an embodiment of the present disclosure.
FIG. 3 is a schematic diagram of a waveform of a pulse signal 101101 according to an embodiment of the present disclosure.
FIG. 4 is a schematic diagram of a waveform of a pulse signal 101001 according to an embodiment of the present disclosure.
FIG. 5 is a schematic diagram of a wireless earbud according to a specific embodiment of the present disclosure.
FIG. 6 is a schematic diagram of a wireless earbud according to Embodiment 1 of a specific circuit of the present disclosure.
FIG. 7 is a schematic diagram of a wireless earbud according to Embodiment 2 of a specific circuit of the present disclosure.

### DESCRIPTION OF EMBODIMENTS

Embodiments of the present disclosure are described in detail below. The embodiments are illustrated in the accompanying drawings, in which the same or similar reference sings indicate the same or similar elements or elements with the same or similar functions. The embodiments described below with reference to the accompanying drawings are exemplary, and they are merely intended to explain the present disclosure, rather than limiting the present disclosure.

A wireless earbud and a wireless earbud system according to the embodiments of the present disclosure will be described below with reference to the accompanying drawings.

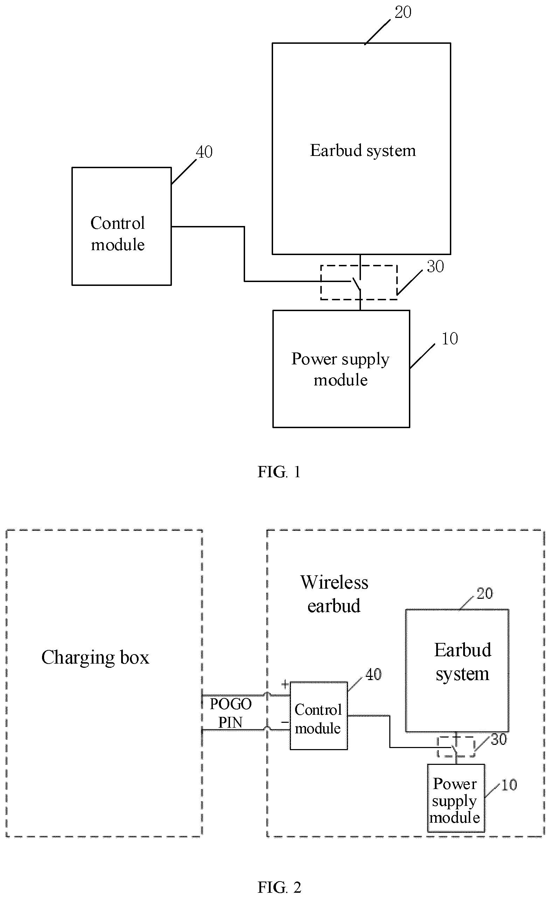

FIG. 1 is a schematic block diagram of a wireless earbud according to an embodiment of the present disclosure. As illustrated in FIG. 1, the wireless earbud according to the present embodiment of the present disclosure includes a power supply module 10, an earbud system 20, a switch module 30, and a control module 40.

The power supply module 10 is configured to supply power to the wireless earbud. The switch module 30 is connected to the power supply module 10 and the earbud system 20. The control module 40 is configured to control, based on a low power consumption entry instruction, the switch module 30 to disconnect a connection between the power supply module 10 and the earbud system 20 to power off the earbud system 20.

It should be noted that, in a specific example, the earbud system 20 may include an earpiece, a speaker, a feedback microphone, and a control circuit. The earpiece has an interior volume. The earpiece is configured to be coupled to the ear and define an acoustic volume including the interior volume and a volume within the ear. The speaker provides acoustic energy to the acoustic volume based on the received driver signal. The feedback microphone can detect at least residual noise within the acoustic volume and generate a feedback audio signal indicating the residual noise. The control circuit includes a sensor interface configured to receive an atmospheric pressure signal. The control circuit is coupled to the feedback microphone to receive the feedback audio signal, and the control circuit is configured to adjust the driver signal at least partially based on the feedback audio signal and the barometric pressure signal.

For example, in the present disclosure, by providing the switch module 30 between the power supply module 10 and the earbud system 20, the control module 40 can control, based on the low power consumption entry instruction such as a pulse signal or a single level signal, the switch module 30 to disconnect the electrical connection between the power supply module 10 and the earbud system 20. In this way, the earbud system 20, such as the earpiece, speaker, feedback microphone, and control circuit, can be powered down, thereby allowing the wireless earbud to enter a low power consumption mode.

According to an embodiment of the present disclosure, the control module 40 is further configured to control, based on a low power consumption exit instruction, the switch module 30 to connect the power supply module 10 with the earbud system 20 to power on the earbud system 20. That is, based on low power consumption exit instruction such as a pulse signal or a single level signal, the control module 40 of the present disclosure can control the switch module 30 to switch on to connected the electrical connection between the power supply module 10 and the earbud system 20, thereby powering on the earbud system 20 again, and the wireless earbud exits the low power consumption mode.

According to an embodiment of the present disclosure, as illustrated in FIG. 2, the above wireless earbud further includes a metal interface POGO PIN, which is connectable to a charging box. The control module 40 is connected to the metal interface POGO PIN. The control module 40 is further configured to receive, via the metal interface POGO PIN, the low power consumption entry instruction or the low power consumption exit instruction transmitted by the charging box.

It should be noted that the metal interface POGO PIN is configured to charge and communicate with the wireless earbud. The common metal interface POGO PIN has two PINs or three PINs, some of which are disposed in the positions at a bottom of a rod of the earbud (as illustrated in FIG. 1), and some of which are disposed in the positions below an earplug of the earbud (as illustrated in FIG. 2). The function of the charging box is to receive the wireless earbuds. At the same time, a battery is disposed in the charging box, for charging the wireless earbuds. Two charging copper columns are provided in the charging box.

For example, when the user needs to control the wireless earbud to enter or exit the low power consumption mode, the user can press a corresponding function button disposed on the charging box to control the wireless earbud to enter the corresponding mode. The charging box transmits, through the metal interface POGO PIN, the received low power consumption entry instruction or low power consumption exit instruction to the control module 40 of the wireless earbud, and the control module 40 executes the instruction transmitted through the metal interface POGO PIN to control the switch module 30. The method is relatively simple.

The low power consumption entry instruction and the low power consumption exit instruction may be pulse signals or single level signals. When the low power consumption entry instruction and the low power consumption exit instruction are pulse signals, the control module 40 is further configured to parse the pulse signal to obtain the control signal for the switch module 30 and control the switch-on or -off of the switch module 30, so as to power on or off the earbud system 20.

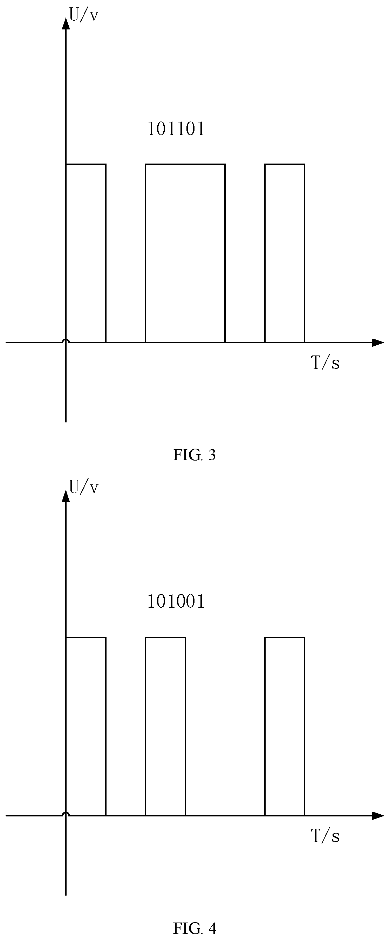

For example, when the control module 40 of the wireless earbud receives the instruction transmitted by the charging box and parses the instruction into a pulse signal of 101101 (as illustrated in FIG. 3), it is acquired that the control signal for the switch module 30 is disconnected. In this case, the switch module 30 is switched off, and thus the earbud system 20 is disconnected from the power supply. That is, the low power consumption mode is entered, and the power consumption is significantly reduced. When the control module 40 of the wireless earbud receives the instruction transmitted by the charging box and parses the instruction into a pulse signal of 101001 (as illustrated in FIG. 4), it is acquired that the control signal for the switch module 30 is connected. In this case, the switch module 30 is controlled to be switched on, and thus the earbud system 20 is powered on, i.e., exiting the low power consumption mode.

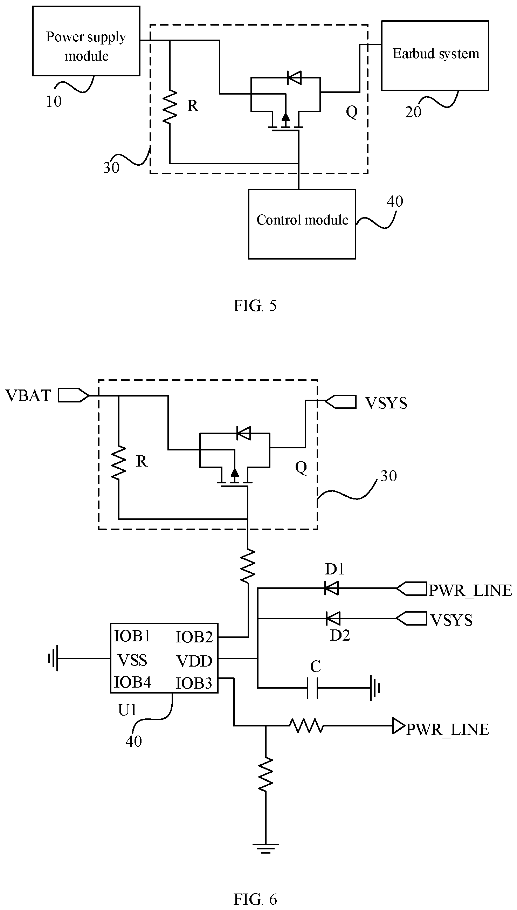

According to a specific circuit embodiment of the present disclosure, as illustrated in FIG. 5, the switch module 30 includes a P-type metal oxide semiconductor field effect transistor Q and a resistor R. The P-type metal oxide semiconductor field effect transistor Q has a control electrode connected to the control module 40, a first electrode connected to the power supply module 10, and a second electrode connected to the earbud system 20. The resistor R has a first end connected to the power supply module 10, and a second end connected to the control electrode of the P-type metal oxide semiconductor field effect transistor Q.

For example, when the user needs to control the wireless earbud to enter or exit the low power consumption mode, the user can press a corresponding function button provided on the charging box to allow the wireless earbud to enter a corresponding mode. The charging box transmits, through the metal interface POGO PIN, the received low power consumption entry instruction or low power consumption exit instruction to the control module 40 of the wireless earbud.

The control module 40 outputs a corresponding single level signal, in response to the instruction transmitted through the metal interface POGO PIN. When the instruction is to enter the low power consumption mode, the control module 40 outputs a high level or a high-impedance state, such that the P-type metal oxide semiconductor field effect transistor Q is turned off; the power of the power supply module 10 stop supplying power to the earbud system 20; and the wireless earbud enters a low power consumption mode. When the instruction is to exit the low power consumption mode, the control module 40 outputs a low level, such that the P-type metal oxide semiconductor field effect transistor Q is turned on; the power supply module 10 supplies power to the earbud system 20; and the wireless earbud exits the low power consumption mode.

To sum up, the wireless earbud of the present disclosure significantly reduces current consumption and prolongs a storage time of the battery. In the low power consumption mode, the present solution only requires the battery self-consumption and the consumption of the control module analysis, and thus the power consumption of the control module analysis is very low; the present solution uses control chips and switches (such as MOS transistors), which are common elements and have low cost, and thus the cost can be significantly reduced, having advantages in terms of the cost; the present solution uses control chips and switches (such as MOS transistors), which are common elements and easy to obtain, and thus the difficulty in acquisition can be significantly lowered; the control chips and switches (such as MOS transistors) used in the present solution are simple and convenient in terms of design, thereby significantly lowering the design difficulty.

According to an embodiment of the present disclosure, the control module 40 may be integrated in a reset integrated circuit chip (IC), and the reset IC is capable of resetting the earbud system 20.

That is, the switch module 30 of the present disclosure further has a reset function. When it needs to be reset, a reset button of the charging box is pressed to disconnect the electrical connection between the power supply module 10 and the earbud system 20. That is, the switch module 30 may disconnect the electrical connection between the power supply module 10 and the earbud system 20, that is, cut off the entire power supply of the wireless earbud. In this way, all the components of the whole system of the wireless earbud are powered down, i.e., the wireless earbud is completely powered off. When the switch module 30 is switched on, the components of the whole system of the wireless earbud are powered on again, thereby improving the reliability of resetting.

The wireless earbud will be described below in conjunction with embodiments of specific circuits.

### Embodiment 1:

As illustrated in FIG. 6, the above wireless earbud further includes a first diode D1 and a second diode D2. The first diode D1 has an anode connected to a metal interface POGO PIN through a PWR_LINE interface, and a cathode connected to a power supply pin VDD of the control module 40. The second diode D2 has an anode connected to the second electrode of the P-type metal oxide semiconductor field effect transistor Q through a VSYS interface, and a cathode connected to the power supply pin VDD of the control module 40. When the low power consumption entry instruction is a low-level signal, the control module is configured to output, based on the low power consumption entry instruction, a high-impedance state to control the P-type metal oxide semiconductor field effect transistor to disconnect the power supply module from the earbud system. When the low power consumption exit instruction is a high-level signal, the control module is configured to output, based on the low power consumption exit instruction, a low-level signal to control the P-type metal oxide semiconductor field effect transistor to connect the earbud system to the power supply module.

As illustrated in FIG. 6, the above-mentioned wireless earbud further includes a capacitor C. The capacitor C has a grounded first end, and a second end connected to the power supply pin VDD of the control module 40.

It should be noted that, as illustrated in FIG. 6, the control module 40 may be a control chip U1; the IOB2 pin of the control chip U1 is connected to the switch module 30 through a resistor; the power supply pin VDD of the control module 40 is connected to the power supply module 10, for example, the interface VBAT of the power supply module 10; the ground pin VSS of the control chip U1 is grounded; the IOB3 of the control chip U1 is an input pin; and the PWR_LINE interface is connected to the metal interface POGO PIN.

For example, on the basis of the embodiment of FIG. 5, the first diode D1 and the second diode D2 are added. When it is necessary to enter the low power consumption mode, a low power consumption entry instruction with a low-level signal is transmitted through the charging box, and the IOB3 pin of the control chip U1 receives the low power consumption entry instruction of the metal interface POGO PIN through the PWR_LINE interface and outputs a high-impedance state, which may be an open-drain state, based on the low power consumption entry instruction. In this way, the P-type metal oxide semiconductor field effect transistor Q can be turned off, i.e., the power of VBAT is not transmitted to VSYS (the interface of the earbud system 20), and the metal interface POGO PIN is not supplied with the power. That is, the interface PWR_LIN is not supplied with the power, and the wireless earbud enters the low power consumption mode.

When it is necessary to exit the low power consumption mode, a low power consumption entry instruction with a high-level signal is transmitted through the charging box, and the IOB3 pin of the control chip U1 receives the low power consumption entry instruction of the metal interface POGO PIN through the PWR_LINE interface and outputs a low-level signal based on the low power consumption entry instruction. In this way, the P-type metal oxide semiconductor field effect transistor Q is turned off, i.e., the power of VBAT is transmitted to VSYS, and the metal interface POGO PIN is supplied with power. That is, the interface PWR_LIN is powered on, and the wireless earbud exits low power consumption model.

It should be noted that, in some embodiments, before exiting the low power consumption mode by turning on the P-type metal oxide semiconductor field effect transistor Q, the control chip U1 is required to parse the received instruction, which may be optimized as "the control chip U1 exits the low power consumption mode after receiving the high-level signal".

It should also be noted that, in this embodiment, when the control chip U1 is supplied with no power, the IOB2 pin of the control chip U1 is in a high-impedance state. Thus, in the low power consumption mode, the power consumption of the control chip U1 can be eliminated.

### Embodiment 2:

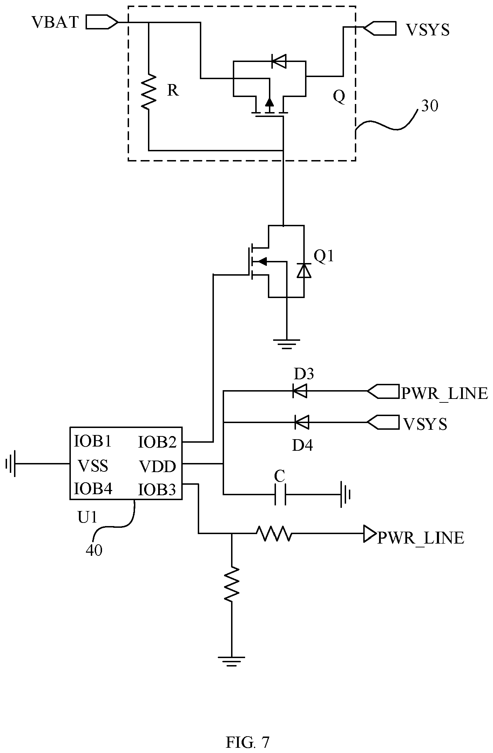

As illustrated in FIG. 7, the above-mentioned wireless earbud further includes a third diode D3, a fourth diode D4, and an N-type metal oxide semiconductor field effect transistor Q1. The third diode D3 has an anode connected to the metal interface, and a cathode connected to the power supply pin of the control module. The fourth diode D4 has an anode connected to the second electrode of the P-type metal oxide semiconductor field effect transistor Q1, and a cathode connected to the power supply pin of the control module. The control module is connected to a control electrode of the N-type metal oxide semiconductor field effect transistor Q1 through the N-type metal oxide semiconductor field effect transistor Q1. The control electrode of the N-type metal oxide semiconductor field effect transistor Q1 is connected to the control module. A first electrode of the N-type metal oxide semiconductor field effect transistor Q1 is grounded. A second electrode of the N-type metal oxide semiconductor field effect transistor Q1 is connected to the control electrode of the N-type metal oxide semiconductor field effect transistor Q2. When the low power consumption entry instruction is a low-level signal, the control module is configured to output, based on the low power consumption entry instruction, a low-level signal to control the P-type metal oxide semiconductor field effect transistor Q to disconnect the power supply module from the earbud system. When the low power consumption exit instruction is a high-level signal, the control module is configured to output, based on the low power consumption exit instruction, a high-impedance state or a high-level signal to control the P-type metal oxide semiconductor field effect transistor Q to connect the earbud system to the power supply module.

As illustrated in FIG. 7, the above-mentioned wireless earbud further includes a capacitor C. The capacitor C has a grounded first end, and a second end connected to the power supply pin VDD of the control module 40.

It should be noted that, as illustrated in FIG. 7, the control module 40 may be a control chip U1; the IOB2 pin of the control chip U1 is connected to the switch module 30 through a resistor; the power supply pin VDD of the control module 40 is connected to the power supply module 10, for example, the interface VBAT of the power supply module 10; the ground pin VSS of the control chip U1 is grounded; the IOB3 of the control chip U1 is an input pin; and the PWR_LINE interface is connected to the metal interface POGO PIN.

For example, on the basis of the embodiment of FIG. 5, the third diode D3, the fourth diode D4, and the N-type metal oxide semiconductor field-effect transistor Q1 are added. When it is necessary to enter the low power consumption mode, a low power consumption entry instruction with a low-level signal is transmitted through the charging box, and the IOB3 pin of the control chip U1 receives the low power consumption entry instruction of the metal interface POGO PIN through the PWR_LINE interface and outputs a low-level signal based on the low power consumption entry instruction. In this way, the N-type metal oxide semiconductor field effect transistor Q1 is turned on, and the P-type metal oxide semiconductor field effect transistor Q is turned off. That is, the power of VBAT is not transmitted to VSYS (the interface of the earbud system 20), and the metal interface POGO PIN is supplied with no power, i.e., the interface PWR_LIN is supplied with no power, and the wireless earbud enters the low power consumption mode.

When it is necessary to exit the low power consumption mode, a low power consumption entry instruction with a high-level signal is transmitted through the charging box, and the IOB3 pin of the control chip U1 receives the low power consumption entry instruction of the metal interface POGO PIN through the PWR_LINE interface and outputs a high-impedance state or a high-level signal based on the low power consumption entry instruction. In this way, the N-type metal oxide semiconductor field effect transistor Q1 is turned off, and the P-type metal oxide semiconductor field effect transistor Q is turned on. That is, the power of VBAT (power supply module 10) is transmitted to VSYS (earbud system 20), and the metal interface POGO PIN is supplied with power, i.e., the interface PWR_LIN is supplied with power, and the wireless earbud exits the low power consumption mode.

It should be noted that, in some embodiments, before exiting the low power consumption mode by turning on the P-type metal oxide semiconductor field effect transistor Q, the control chip U1 is required to parse the received instruction, which may be optimized as "the control chip U1 exits the low power consumption mode after receiving the high-level signal."

It should also be noted that, in this embodiment, when the control chip U1 is supplied with no power, the IOB2 pin of the control chip U1 is grounded. Thus, in the low power consumption mode, the power consumption of the control chip U1 can be eliminated.

To sum up, according to the wireless earbud of the embodiments of the present disclosure, by adding the switch module between the power supply module and the earbud system, the control module can control, based on the low power consumption entry instruction, the switch module to disconnect the power supply module from the earbud system, thereby powering down the earbud system and allowing the wireless earbud to enter the low power consumption mode. In this way, the current consumption can be significantly reduced, and the cost, acquisition difficulty, and design difficulty can be lowered.

Based on the above embodiments, the present disclosure also provides a wireless earbud system, which includes a charging box and the above-mentioned wireless earbud.

In the wireless earbud system according to the embodiments of the present disclosure, the switch module is configured to control the wireless earbud to enter the low power consumption mode, thereby significantly reducing current consumption, lowering cost and acquisition difficulty, and reducing design difficulty.

In the specification, descriptions with reference to the terms "an embodiment", "some embodiments", "examples", "specific examples", or "some examples" etc. mean that specific features, structure, materials or characteristics described in conjunction with the embodiment or example are included in at least one embodiment or example of the present disclosure. In this specification, the schematic representations of the above terms do not necessarily refer to the same embodiment or example. In addition, the described specific features, structures, materials or characteristics may be combined in any one or more embodiments or examples in a suitable manner. In addition, those skilled in the art can combine the different embodiments or examples and the features of the different embodiments or examples described in this specification without contradicting each other.

In addition, the terms "first" and "second" are only used for descriptive purposes, and cannot be understood as indicating or implying relative importance or implicitly indicating the number of indicated technical features. Therefore, the features defined with "first" and "second" may explicitly or implicitly include at least one of the features. In the description of the present disclosure, "plurality" means at least two, such as two, three, etc., unless otherwise specifically defined.

Any process or method description in the flowcharts or otherwise described herein may be understood to represent a module, segment or portion of code including one or more executable instructions for implementing custom logical functions or steps of the process, and the scope of the preferred embodiments of the present disclosure includes alternative implementations, in which the functions may be performed in the order as illustrated or discussed, for example, performing the functions substantially concurrently or in an reverse order according to the involved functions, which can be understood by those skilled in the related art of the present disclosure.

For example, the logic and/or steps represented in flowcharts or otherwise described herein may be regarded as an ordered listing of executable instructions for implementing the logical functions, and they may be embodied in any computer-readable medium for use in an instruction execution system, apparatus, or device (such as a computer-based system, a system including a processor, or other systems capable of fetching and executing the instructions from an instruction execution system, apparatus, or device) or in conjunction with such instruction execution system, apparatus, or devices. As for this specification, a "computer-readable medium" may be any device that may contain, store, communicate, propagate, or transport the program for use by or in conjunction with an instruction execution system, apparatus, or device. More specific examples (non-exhaustive list) of computer readable media include: electrical connections with one or more wirings (electronic apparatuses), portable computer disk cartridges (magnetic apparatuses), Random Access Memory (RAM), Read Only Memory (ROM), Erasable Editable Read Only Memory (EPROM or Flash Memory), fiber optic apparatuses, and portable Compact Disc Read Only Memory (CDROM). In addition, the computer-readable medium may even be paper or other suitable medium on which the program may be printed, as the paper or other medium may be optically scanned, for example, followed by editing, interpretation, or other suitable ways as necessary to process to obtain the program electronically and then store it in computer memory.

It should be understood that various parts of the present disclosure may be implemented in hardware, software, firmware, or a combination thereof. In the above embodiments, various steps or methods may be implemented in software or firmware stored in memory and executed by a suitable instruction execution system. For example, when they are implemented in hardware as in another embodiment, they may be implemented by any one of the following techniques known in the art: discrete logic circuits with logic gate circuits for implementing logic functions on data signals, application specific integrated circuits with suitable combinational logic gate circuits, Programmable Gate Arrays (PGA), Field Programmable Gate Arrays (FPGA), or combinations thereof.

Those of ordinary skill in the art can understand that all or part of the steps of the methods according to the above embodiments may be implemented by instructing the relevant hardware through a program, and the program may be stored in a computer-readable storage medium. When executing the program, one or a combination of the steps of the method embodiments is implemented.

In addition, the respective functional units in the respective embodiments of the present disclosure may be integrated into one processing module; or each unit may exist physically alone; or two or more units may be integrated into one module. The above integrated modules may be implemented in the form of hardware, and may also be implemented in the form of software function modules. When the integrated modules are implemented in the form of software functional modules and sold or used as independent products, they may also be stored in a computer-readable storage medium.

The above storage medium may be a read-only memory, a magnetic disk, an optical disk, etc. Although the embodiments of the present disclosure have been illustrated and described above, it should be understood that the above embodiments are exemplary and should not be construed as limitations of the present disclosure. Those of ordinary skill in the art may make changes, modifications, substitutions and alterations to the above embodiments without departing from the scope of the present disclosure.

## Claims

1. A wireless earbud, comprising:
a power supply module configured to supply power to the wireless earbud;
an earbud system;
a switch module connected to the power supply module and the earbud system; and
a control module configured to control, based on a low power consumption entry instruction, the switch module to disconnect the power supply module from the earbud system to power off the earbud system.

2. The wireless earbud according to claim 1, wherein the control module is further configured to control, based on a low power consumption exit instruction, the switch module to connect the earbud system to the power supply module to power on the earbud system.

3. The wireless earbud according to claim 2, further comprising:
a metal interface connectable to a charging box,
wherein the control module is connected to the metal interface and further configured to receive, via the metal interface, the low power consumption entry instruction or the low power consumption exit instruction transmitted by the charging box.

4. The wireless earbud according to claim 3, wherein the switch module comprises:
a P-type metal oxide semiconductor field effect transistor having a control electrode connected to the control module, a first electrode connected to the power supply module, and a second electrode connected to the earbud system; and
a resistor having a first end connected to the power supply module, and a second end connected to the control electrode of the P-type metal oxide semiconductor field effect transistor.

5. The wireless earbud according to claim 4, wherein each of the low power consumption entry instruction and the low power consumption exit instruction is a pulse signal or a single-level signal, and
wherein, when each of the low power consumption entry instruction and the low power consumption exit instruction is a pulse signal, the control module is further configured to:
parse the pulse signal to obtain a control signal for the switch module; and
control the switch module to be switched on or off to power on or power off the earbud system.

6. The wireless earbud according to claim 1, wherein:
the control module has a power supply pin connected to the power supply module, and
the control module is integrated in a reset IC, the reset IC being capable of resetting the earbud system.

7. The wireless earbud according to claim 5, further comprising:
a first diode having an anode connected to the metal interface, and a cathode connected to a power supply pin of the control module; and
a second diode having an anode connected to the second electrode of the P-type metal oxide semiconductor field effect transistor, and a cathode connected to the power supply pin of the control module,
wherein, when the low power consumption entry instruction is a low-level signal, the control module is configured to output, based on the low power consumption entry instruction, a high-impedance state to control the P-type metal oxide semiconductor field effect transistor to disconnect the power supply module from the earbud system, and
wherein, when the low power consumption exit instruction is a high-level signal, the control module is configured to output, based on the low power consumption exit instruction, a low-level signal to control the P-type metal oxide semiconductor field effect transistor to connect the earbud system to the power supply module.

8. The wireless earbud according to claim 5, further comprising:
a third diode having an anode connected to the metal interface, and a cathode connected to a power supply pin of the control module;
a fourth diode having an anode connected to the second electrode of the P-type metal oxide semiconductor field effect transistor, and a cathode connected to the power supply pin of the control module; and
an N-type metal oxide semiconductor field effect transistor, wherein the control module is connected to a control electrode of the N-type metal oxide semiconductor field effect transistor through the N-type metal oxide semiconductor field effect transistor; the control electrode of the N-type metal oxide semiconductor field effect transistor is connected to the control module; a first electrode of the N-type metal oxide semiconductor field effect transistor is grounded; and a second electrode of the N-type metal oxide semiconductor field effect transistor is connected to the control electrode of the N-type metal oxide semiconductor field effect transistor,
wherein, when the low power consumption entry instruction is a low-level signal, the control module is configured to output, based on the low power consumption entry instruction, a low-level signal to control the P-type metal oxide semiconductor field effect transistor to disconnect the power supply module from the earbud system, and
wherein, when the low power consumption exit instruction is a high-level signal, the control module is configured to output, based on the low power consumption exit instruction, a high-impedance state or a high-level signal to control the P-type metal oxide semiconductor field effect transistor to connect the earbud system to the power supply module.

9. The wireless earbud according to any one of claims 6 to 8, further comprising:
a capacitor having a grounded first end, and a second end connected to the power supply pin of the control module.

10. The wireless earbud according to claim 9, wherein the control module comprises a control chip connected to the switch module, wherein the power supply pin of the control module is connected to the power supply module, and wherein a ground pin of the control chip is grounded.

11. A wireless earbud system, comprising:
a charging box, and
a wireless earbud, comprising:
a power supply module configured to supply power to the wireless earbud;
an earbud system;
a switch module connected to the power supply module and the earbud system; and
a control module configured to control, based on a low power consumption entry instruction, the switch module to disconnect the power supply module from the earbud system to power off the earbud system.

12. The wireless earbud system according to claim 11, wherein the control module is further configured to control, based on a low power consumption exit instruction, the switch module to connect the earbud system to the power supply module to power on the earbud system.

13. The wireless earbud system of claim 12, further comprising:
a metal interface connectable to a charging box,
wherein the control module is connected to the metal interface and further configured to receive, via the metal interface, the low power consumption entry instruction or the low power consumption exit instruction transmitted by the charging box.

14. The wireless earbud system according to claim 13, wherein the switch module comprises:
a P-type metal oxide semiconductor field effect transistor having a control electrode connected to the control module, a first electrode connected to the power supply module, and a second electrode connected to the earbud system, and
a resistor having a first end connected to the power supply module, and a second end connected to the control electrode of the P-type metal oxide semiconductor field effect transistor.

15. The wireless earbud system according to claim 14, wherein each of the low power consumption entry instruction and the low power consumption exit instruction is a pulse signal or a single-level signal;
wherein, when each of the low power consumption entry instruction and the low power consumption exit instruction is a pulse signal, the control module is further configured to:
parse the pulse signal to obtain a control signal for the switch module; and
control the switch module to be switched on or off to power on or power off the earbud system.

16. The wireless earbud system according to claim 11, wherein the control module has a power supply pin connected to the power supply module, and the control module is integrated in a reset IC, the reset IC being capable of resetting the earbud system.

17. The wireless earbud system of claim 15, further comprising:
a first diode having an anode connected to the metal interface, and a cathode connected to a power supply pin of the control module; and
a second diode having an anode connected to the second electrode of the P-type metal oxide semiconductor field effect transistor, and a cathode connected to the power supply pin of the control module,
wherein, when the low power consumption entry instruction is a low-level signal, the control module is configured to output, based on the low power consumption entry instruction, a high-impedance state to control the P-type metal oxide semiconductor field effect transistor to disconnect the power supply module from the earbud system, and
wherein, when the low power consumption exit instruction is a high-level signal, the control module is configured to output, based on the low power consumption exit instruction, a low-level signal to control the P-type metal oxide semiconductor field effect transistor to connect the earbud system to the power supply module.

18. The wireless earbud system of claim 15, further comprising:
a third diode having an anode connected to the metal interface, and a cathode connected to a power supply pin of the control module;
a fourth diode having an anode connected to the second electrode of the P-type metal oxide semiconductor field effect transistor, and a cathode connected to the power supply pin of the control module; and
an N-type metal oxide semiconductor field effect transistor, wherein the control module is connected to a control electrode of the N-type metal oxide semiconductor field effect transistor through the N-type metal oxide semiconductor field effect transistor; the control electrode of the N-type metal oxide semiconductor field effect transistor is connected to the control module; a first electrode of the N-type metal oxide semiconductor field effect transistor is grounded; and a second electrode of the N-type metal oxide semiconductor field effect transistor is connected to the control electrode of the N-type metal oxide semiconductor field effect transistor,
wherein, when the low power consumption entry instruction is a low-level signal, the control module is configured to output, based on the low power consumption entry instruction, a low-level signal to control the P-type metal oxide semiconductor field effect transistor to disconnect the power supply module from the earbud system, and
wherein, when the low power consumption exit instruction is a high-level signal, the control module is configured to output, based on the low power consumption exit instruction, a high-impedance state or a high-level signal to control the P-type metal oxide semiconductor field effect transistor to connect the earbud system to the power supply module.

19. The wireless earbud system according to claims 16 to 18, further comprising:
a capacitor having a grounded first end, and a second end connected to the power supply pin of the control module.

20. The wireless earbud system according to claim 19, wherein the control module comprises a control chip connected to the switch module, wherein the power supply pin of the control module is connected to the power supply module, and wherein a ground pin of the control chip is grounded.
